# EUROPÄISCHE PATENTSCHRIFT

(11) **EP 0 839 690 B1**
(45) Veröffentlichungstag und Bekanntmachung des Hinweises auf die Patenterteilung: **02.01.2003**
(21) Anmeldenummer: 97116768.9
(22) Anmeldetag: 26.09.1997
(51) Int. Cl.: B60R 19/18, B60R 19/56, B60R 19/04

(54) **Stossfänger und Unterfahrschutz für ein Kraftfahrzeug, insbesondere für ein Nutzkraftfahrzeug**
Bumper and underride protection for a motor vehicle, in particular for a utility motor vehicle.
Pare-choc et protection anti-encastrement pour véhicule à moteur, notamment pour véhicule utilitaire

(30) Priorität: 18.10.1996 DE 19643049
(43) Veröffentlichungstag der Anmeldung: 06.05.1998
(73) Patentinhaber: DaimlerChrysler AG, 70567 Stuttgart (DE)
(72) Erfinder: Bode, Peter, 71384 Weinstadt (DE); Martin, Gerd, 70327 Stuttgart (DE)

(56) Entgegenhaltungen:
- DE-U- 9 313 297
- FR-A- 2 536 711

## Beschreibung

Die Erfindung betrifft einen Stoßfänger und Unterfahrschutz für ein Kraftfahrzeug nach dem Oberbegriff des Patentanspruchs 1.

Aus der DE-OS 26 50 096 ist ein Stoßfänger bekannt, der aus glasfaserverstärktem Kunststoff besteht und der dort vorgesehene U-förmig profilierte Tragkörper ist in den hochbeanspruchten Zonen durch aufgebrachte bzw. eingelegte Verstärkungen armiert.

Der DE 93 13 297 U1 ist ein Stoßfänger für ein Kraftfahrzeug zu entnehmen, dessen Tragkörper aus einem stranggepressten Hohlprofil besteht, innerhalb dem ein an dessen Hohlquerschnitt angepasstes weiteres Hohlprofil zur Verstärkung des Tragkörpers angeordnet ist.

Ähnliche Stosstangen sind auch aus der DE-OS 27 08 856 bekannt, wo man eine Stoßstange aus Kunststoffmaterial als Verbund zwischen einem Außenmantel mit C-förmigem Querschnitt und einer Rückenplatte aufgebaut hat, die mit Versteifungsrippen versehen ist.

Aus der DE 23 44 686 C3 ist auch ein Stoßfänger aus Leichtmetall bekannt, der aus einem zum Aufbau des Fahrzeuges hin offenen Profil besteht, dessen Widerstandsmoment durch Rippen oder durch die Ausgestaltung der Schenkel des Profils erhöht worden ist und zwar so, daß sich für diese Rippen oder Schenkel ein an die auftretenden Belastungsfälle angepaßter Querschnittsverlauf ergibt.

Solche Bauarten lassen sich nicht ohne weiteres auf Stoßfänger übertragen, die als Unterfahrschutz für Nutzkraftfahrzeuge aus widerstandsfähigem Stahlblech gebildet sein sollen, weil hier die Ausgestaltung von angepaßten Profilen zu aufwendig ist und vor allen Dingen sich je nach Breite der gewünschten Stoßfänger ändern müßte.

Ein Stoßfänger der eingangs genannten Art ist aus der EP 0 734 908 A2 bekannt. Dort hat man den Tragkörper für den Stoßfänger, der in seinen an die Fahrzeuglängsträger angeschlossenen Bereichen mit Verformungsgliedern versehen ist, aus einem Hohlprofil aufgebaut, dem in Fahrtrichtung ein elastischer Pralldämpfer vorgeschaltet ist. Das Hohlprofil des Tragkörpers besteht aus zwei mit ihren freien Schenkeln übereinander geschobenen U-förmigen Halbschalen, die an ihren Verbindungsstellen vernietet sind. Diesen Halbschalen ist an der etwa in der Mitte des hohlen Tragprofiles gelegenen Verbindungsstelle eine ebenfalls U-förmige Verstärkungseinlage zugeordnet, deren Schenkel über die Nieten mit den beiden Halbschalen verbunden sind, welche die Halbschalen zum Hohlprofil zusammensetzen. Bei solchen Tragkörpern ist es nicht ohne weiteres möglich, diese Hohlträger an unterschiedliche Biegemomentverläufe anzupassen, wenn der Aufwand in gewissen Grenzen gehalten werden soll.

Der Erfindung liegt daher die Aufgabe zugrunde, einen Stoßfänger und Unterfahrschutz dieser Art so auszubilden, daß er die gewünschte ausreichende Stabilität aufweist, dennoch aber an unterschiedliche Biegemomentenverläufe ohne weiteres anpaßbar ist.

Zur Lösung dieser Aufgabe wird bei einem Stoßfänger und Unterfahrschutz der eingangs genannten Art vorgesehen, daß die Verstärkungseinlagen jeweils jeder der Halbschalenzugeordnet, der Höhe des Querschnittes des U-Profiles angepasst und passend mit ihren Kanten in die Kanten der Halbschalen eingesetzt sind, und damit formschlüssig zu den Halbschalen liegen, und daß die Verstärkungseinlagen beidseitig von ihren Enden mit nach ihrer Mitte in Längsrichtung der Verstärkungseinlagen zu verlaufenden Ausnehmungen versehen sind, sowie daß jeweils beiden innenliegenden Längskanten der Verstärkungseinlagen zugeordnete Versteifungswinkelstreifen vorgesehen sind.

Bei dieser Ausgestaltung wird es möglich, sowohl die Einlagen als auch die Verstärkungswinkelstreifen in der jeweils notwendigen Länge und Dicke vorzusehen. Durch die gewählte Ausgestaltung der Einlagen ist die neutrale Faser weitgehend unverstärkt. Die bei Belastungen besonders beanspruchten Kanten des Stoßfängers dagegen sind, da sie aus drei aufeinandergefügten Schichten bestehen, besonders steif ausgebildet. Die gesamte Anordnung bleibt aber, weil die Versteifungen nicht durchgehend verlaufen, verhältnismäßig leicht. Auch der Materialaufwand kann kleingehalten werden.

In Weiterbildung der Erfindung können jeder Halbschale zwei Einlagen zugeordnet sein, wobei diese Einlagen eine Länge von etwas weniger als die Hälfte der Länge der Halbschale besitzen und mit ihrem nach innen gerichteten Ende in Abstand zueinander liegen. Die Einlagen können in einfacher Weise eingeschweißt werden, ebenso die Verstärkungswinkelstreifen und in Weiterbildung der Erfindung können die Ausnehmungen der Einlagen nach beiden Enden unterschiedlich lang ausgebildet sein, je nachdem, wie sich der errechnete Biegemomentenverlauf ergibt. Dabei können diese Ausnehmungen eine Breite von etwa einem Drittel der Gesamthöhe der Einlage aufweisen, so daß eine relativ große Gewichtsersparnis erreicht werden kann.

Die längeren Ausnehmungen der beiden Einlagen können zweckmäßig aufeinander zu und zur Mitte der Halbschale gerichtet sein. Es entsteht durch diese Ausgestaltung eine allmähliche Zunahme des Widerstandsmomentes zur Einspannstelle hin. Dies wird auch durch die weiteren Maßnahmen erreicht, daß die Ränder der Ausnehmungen leicht konisch zur Mitte der Einlage sich verjüngen und die Winkelbleche in die Kanten der Einlagen hereingelegt sind, wobei diese etwa ein Drittel der Länge der Einlage einnehmen können und im Bereich der Unterfahrschutzbefestigungen, die zur Befestigung des Stoßfängers am Rahmenkopf des Fahrzeugs dienen, angebracht sind.

Durch diese Ausgestaltung kann in verschiedenen Belastungspositionen erreicht werden, daß in dem so gebildeten Querträger und Frontunterfahrschutz bei Belastungen etwa gleiche Beanspruchungen auftreten. Bei der erfindungsgemäßen Ausgestaltung sind die Einlagen und die Verstärkungswinkelstreifen so angeordnet, daß die Kanten des Querträgers des Stoßfängers verstärkt werden, um Beulen und Einknicken zu verhindern. Im Bereich der neutralen Phase dagegen bleibt der Querträger zur Gewichtseinsparung unverstärkt.

Die Erfindung ist anhand eines Ausführungsbeispieles in der Zeichnung dargestellt und wird im folgenden erläutert. Es zeigen:
- Fig. 1: eine schematische perspektivische Darstellung der Anordnung des erfindungsgemäßen Stoßfängers an einem Rahmenkopf eines Fahrzeuges,
- Fig. 2: den erfindungsgemäßen Stoßfänger in einer Art "Röntgen"-darstellung mit allen Einzelteilen,
- Fig. 3: eine Ansicht des Stoßfängers in Richtung des Pfeiles III in Fig. 2 gesehen,
- Fig. 4: die Draufsicht auf den Stoßfänger der Fig. 2 und 3 in Richtung des Pfeiles IV gesehen,
- Fig. 5: die Ansicht einer der beiden Halbschalen des Stoßfängers der Fig. 2 bis 4 in Richtung der Pfeile V gesehen,
- Fig. 6: die Draufsicht auf die Halbschale der Fig. 5 in Richtung des Pfeiles VI gesehen,
- Fig. 7: die Ansicht des Stoßfängers der Fig. 3 in Richtung des Pfeiles VII gesehen,
- Fig. 8: die perspektivische Darstellung der Halbschale der Fig. 5 und 6 mit den eingesetzten Verstärkungsteilen,
- Fig. 9: die Ansicht auf eine Hälfte der Halbschale der Fig. 8 in Richtung des Pfeiles IX gesehen,
- Fig. 10: die Draufsicht auf den in Fig. 9 gezeigten Teil der Halbschale der Fig. 8 in Richtung des Pfeiles X,
- Fig. 11: die vergrößerte Darstellung eines Teilschnittes durch die Fig. 9 längs der Schnittlinie XI,
- Fig. 12: die Darstellung der linken Verstärkungseinlage der Halbschale nach Fig. 5,
- Fig. 13: die Ansicht der Einlage der Fig. 12 in Richtung des Pfeiles XIII,
- Fig. 14: die Ansicht des der Einlage der Fig. 12 zugeordneten Verstärkungswinkels in vergrößerter Darstellung, und
- Fig. 15: die Ansicht des Verstärkungswinkels der Fig. 14 in Richtung des Pfeiles XV gesehen.

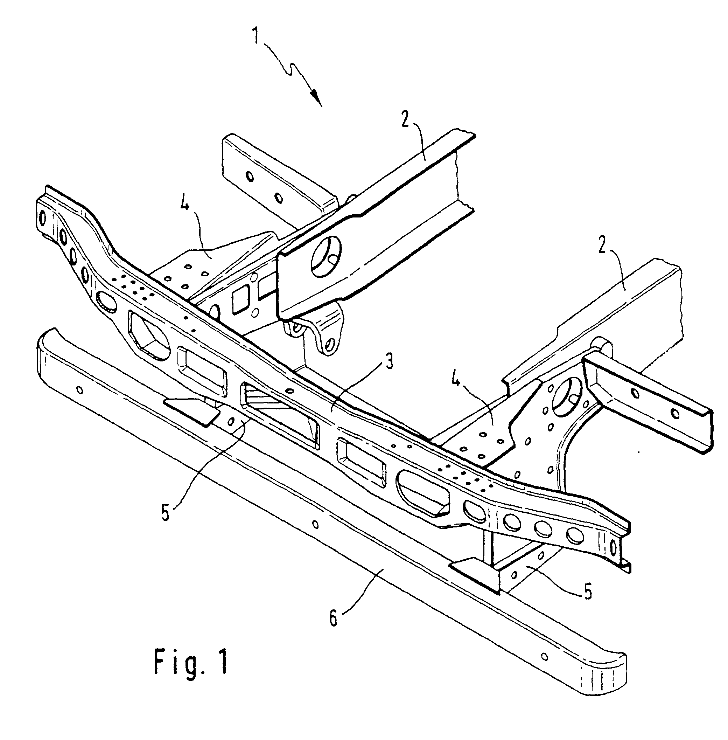

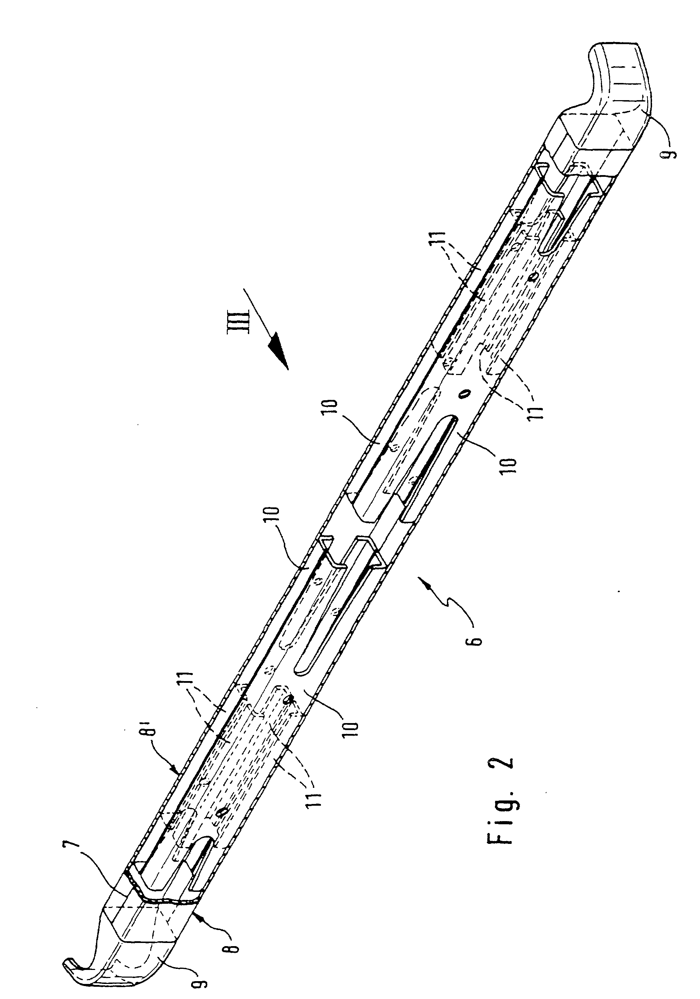

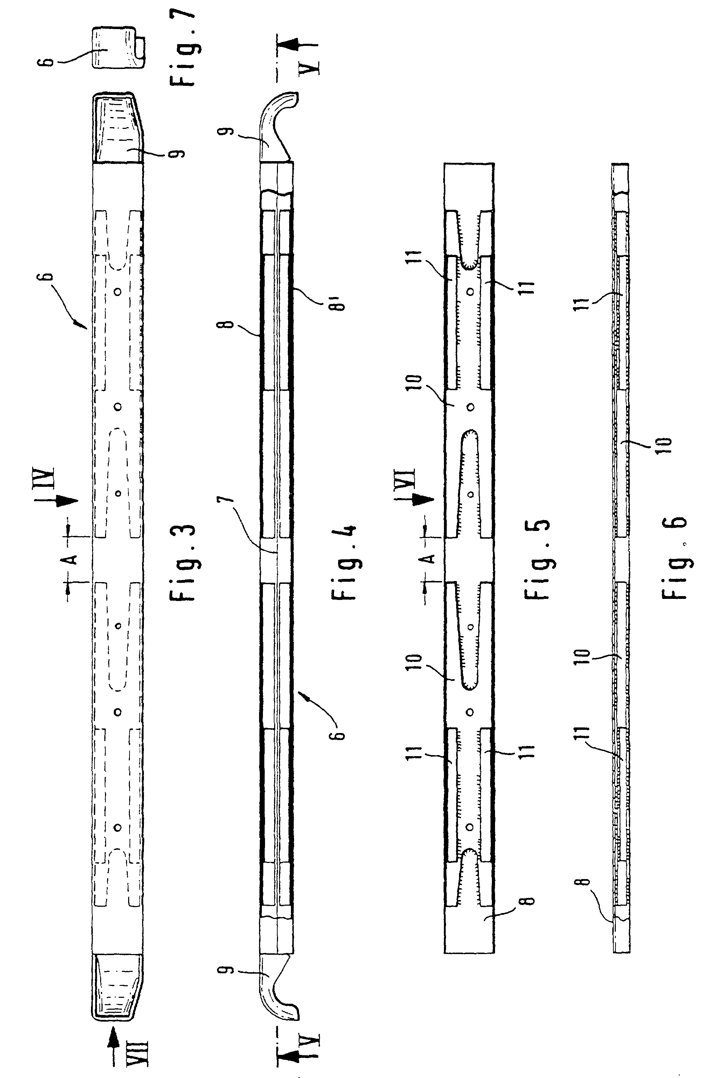

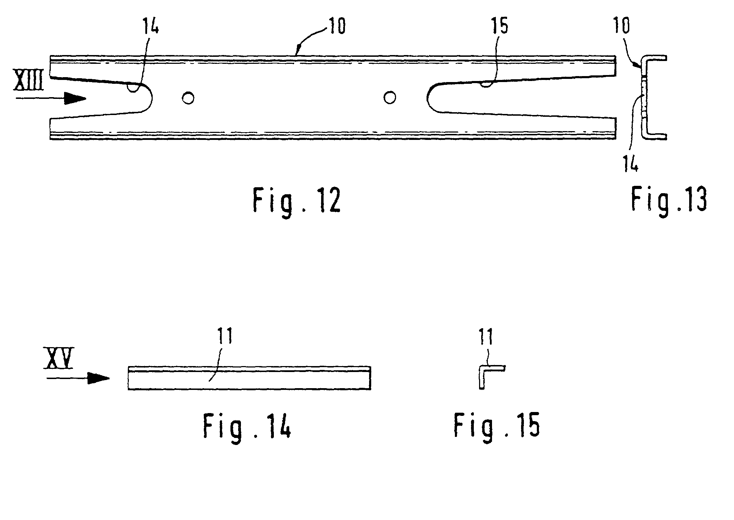

In der Fig. 1 ist ein Rahmenkopf 1 eines Lastkraftwagens gezeigt, der an zwei sich in Fahrzeuglängsrichtung erstreckenden Längsträgern 2 befestigt ist. Der Rahmenkopf besitzt einen Frontquerträger 3, der sich über die Fahrzeugbreite bis über die beiden Längsträger 2 hinaus erstreckt. Dieser Frontquerträger 3 ist mit Hilfe von zwei Rahmenanschlußstücken 4 an den Längsträgern 2 befestigt. An den unteren Enden der beiden Rahmenanschlußstücke 4 ist mit Hilfe von Halterungen 5 ein Frontunterfahrschutz 6 in der Form des erfindungsgemäßen Stoßfängers ange ordnet. Dieser Stoßfänger und Frontunterfahrschutz 6 besteht nun gemäß den Fig. 2 bis 4 aus zwei spiegelbildlich zu ihrer Verbindungsebene 7 aufgebauten Halbschalen 8 und 8', die auf diese Weise ein geschlossenes Hohlprofil bilden. An dieses Hohlprofil sind seitlich jeweils gebogene Endstücke 9 angeschweißt. Die Fig. 5 bis 15 lassen nun deutlich erkennen, daß jede der beiden Halbschalen 8 bzw. 8' mit jeweils zwei Verstärkungseinlagen 10 und mit jeweils vier Verstärkungswinkelstreifen 11 versehen ist, die im einzelnen in den Fig. 12 und 13 bzw. 14 und 15 dargestellt sind. Da beide Halbschalen 8 und 8' spiegelbildlich zueinander aufgebaut sind, wird im folgenden nur die Halbschale 8 beschrieben werden.

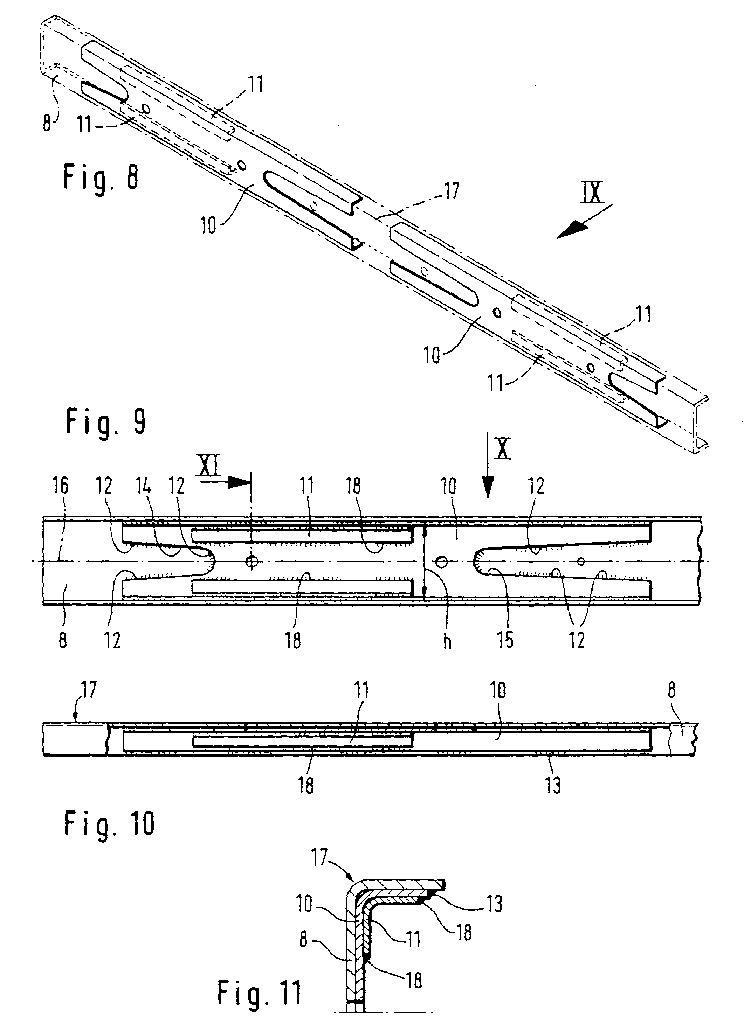

Wie die Fig. 2 und 8 verdeutlichen, sind die Einlagen 10, die ebenso wie die Halbschale 8 aus einem Stahlblech bestehen, im Bereich der Befestigungsstellen 5 angeordnet und so ausgebildet, daß sich eine allmähliche Zunahme des Widerstandsmomentes zu der Befestigungsstelle 5 hin ergibt, so daß sich bei einer Belastung eine möglichst gleichmäßige Biegemomentverteilung im Unterfahrschutz ergibt.

Zu diesem Zweck sind die Einlagen 10, wie die Fig. 9 und 10 bzw. 12 und 13 deutlich erkennen lassen, ebenfalls als ein U-Profil ausgebildet, das passend in das U-Profil der Halbschale 8 einführbar und an den Stellen 12 und 13 mit der Halbschale 8, die ebenfalls als ein U-Profil ausgebildet ist, verschweißt ist. Jede Einlage 10 ist dabei mit Aussparungen 14 und 15 versehen, von denen sich die Aussparung 15 bis fast über ein Drittel der Länge der Einlage 10 nach innen erstreckt und eine Breite von etwa einem Drittel der Höhe h der Einlage 10 aufweist. Die Aussparung 15 und die Aussparung 14 verjüngen sich dabei leicht konisch zur Mitte der Einlage 10 hin. Die Aussparung 14 besitzt eine kleinere Länge. In den Bereichen dieser Aussparungen 14 und 15 liegt daher in der neutralen Faser 16 der Halbschale 8 keine Verstärkung vor. Die Verstärkung ist dagegen in den Bereich der Kanten 17 der Halbschale 8 gelegt. Die Fig. 11 zeigt dabei sehr deutlich, daß durch die Anordnung der drei Schichten im Bereich der Kanten 17 eine ausgezeichnete Verstärkung entsteht, ohne daß jedoch das Gewicht der Halbschale 8 zu groß wird.

Dabei sind jeder der U-förmigen Halbschalen 8, 8' zwei solcher Einlagen 10 zugeordnet, die mit ihrem zur Mitte der Halbschale gerichteten Enden in Abstand A zueinanderliegen.

Im Bereich der Befestigungsstellen 5 sind in den Bereich der Kanten der Einlage 10 die Verstärkungswinkelstreifen 11 hereingelegt, die wiederum, wie die Fig. 9, 10 und 11 zeigen, an mehreren Stellen 18 mit der Einlage 10 verschweißt sind. Die Länge dieser Verstärkungswinkelstreifen 11 beträgt etwa ein Drittel der Länge der Einlage 10. Die Schenkel des Verstärkungswinkelstreifens 11 sind gleich lang.

Durch die gewählte Aussteifung des U-Profiles der Halbschalen 8 läßt sich auch eine Anpassung an verschiedene Breiten von Stoßfängern und Unterfahrschutzanordnungen erreichen, weil die Einlagen und die Verstärkungswinkelstreifen auch an unterschiedlichen Stellen und gegebenenfalls auch mit unterschiedlichen Abmessungen eingesetzt werden können. Die gewählte Kantenversteifung des als geschlossenes Hohlprofil ausgebildeten Stoßfängers bringt eine außerordentliche Versteifung in den vorher durch Berechnung ermittelten Bereich, ohne daß jedoch das Gesamtgewicht des Unterfahrschutzes zu groß wird.

## Patentansprüche

1. Stoßfänger und Unterfahrschutz für ein Kraftfahrzeug, insbe sondere ein Nutzkraftfahrzeug mit einem unter Verwendung eines U-Profiles aufgebauten Tragkörper, der als ein aus zwei U-förmig profilierten Halbschalen (8, 8') aufgebautes Hohlprofil ausgebildet ist, das mit U-förmigen Verstärkungseinlagen versehen ist,
**dadurch gekennzeichnet**
**daß** die Verstärkungseinlagen (10) jeweils jeder der Halbschalen(8, 8') zugeordnet, der Höhe (h) des Querschnittes des U-Profiles angepasst und passend mit ihren Kanten in die Kanter (17) der Halbschalen (8, 8') eingesetzt sind, und damit formschlüssig zu den Halbschalen(8, 8') liegen, daß die Verstärkungseinlagen (10) beidseitig von ihren Enden mit nach ihrer Mitte in Längsrichtung der Verstärkungseinlagen zu verlaufenden Ausnehmungen (14, 15) versehen sind, und daß jeweils beiden innenliegenden Längskanten der Verstärkungseinlagen (10) zugeordnete Versteifungswinkelstreifen (11) vorgesehen sind.

2. Stoßfänger nach Anspruch 1,
**dadurch gekennzeichnet,**
**daß** jeder Halbschale (8, 8') zwei Einlagen (10) zugeordnet sind, und daß diese Einlagen eine Länge von etwa der Hälfte der Länge der Halbschale (8, 8') besitzen, und mit ihrem nach innen gerichteten Ende im Abstand (A) zueinander liegen.

3. Stoßfänger nach den Ansprüchen 1 und 2,
**dadurch gekennzeichnet,**
**daß** die Aussparungen (14, 15) der Einlagen (10) nach beiden Enden unterschiedlich lang ausgebildet sind.

4. Stoßfänger nach Anspruch 2 oder 3,
**dadurch gekennzeichnet,**
**daß** die Aussparungen (14, 15) eine Breite von etwa einem Drittel der Höhe (h) der Einlage (10) aufweisen.

5. Stoßfänger nach Anspruch 3,
**dadurch gekennzeichnet,**
**daß** die längeren Aussparungen (15) aufeinander zu und zur Mitte der Halbschale (8, 8') gerichtet sind.

6. Stoßfänger nach Anspruch 3,
**dadurch gekennzeichnet,**
**daß** die Ränder der Aussparungen (14, 15) leicht konisch zur Mitte der Einlage (10) sich verjüngend verlaufen.

7. Stoßfänger nach Anspruch 1,
**dadurch gekennzeichnet,**
**daß** die Versteifungswinkelstreifen (11) in die Kanten der Einlagen (10) hereingelegt sind, und daß ihre Länge etwa ein Drittel der Länge der Einlagen (10) entsprechen.

8. Stoßfänger nach Anspruch 1,
**dadurch gekennzeichnet,**
**daß** die Verstärkungswinkelstreifen (11) im Bereich von Ebenen liegen, die durch die Befestigungsstellen (5) des Stoßfängers am Fahrzeug verlaufen.

## Claims

1. Bumper and under-run guard for a motor vehicle, in particular a utility vehicle, with a supporting body assembled using a U-section, designed as a hollow section assembled from two half-shells (8, 8') with a U-shaped contour provided with U-shaped reinforcing inserts,
**characterised in that**
the reinforcing inserts (10) co-operate respectively with each of the half-shells (8, 8'), are adapted to the height (h) of the cross section of the U-section and inserted with their edges fitted in the edges (17) of the half-shells (8, 8') so as to sit in a form-fit arrangement with the half-shells (8, 8'), the reinforcing inserts (10) are provided on each side at their ends with recesses (14, 15) extending towards their centre in the longitudinal direction of the reinforcing inserts, and both inwardly lying longitudinal edges of the reinforcing inserts (10) are respectively provided with co-operating angular stiffening strips (11).

2. Bumper as claimed in claim 1,
**characterised in that**
each half-shell (8, 8') co-operates with two inserts (10) and these inserts are of a length which is approximately half the length of the half-shell (8, 8') and lie with their inwardly directed ends at a distance (A) from one another.

3. Bumper as claimed in claims 1 and 2,
**characterised in that**
the recesses (14, 15) at the two ends of the inserts (10) are of differing lengths.

4. Bumper as claimed in claim 2 or 3,
**characterised in that**
the recesses (14, 15) have a width of approximately one third of the height (h) of the insert (10).

5. Bumper as claimed in claim 3,
**characterised in that**
the longer recesses (15) are directed towards one another and towards the centre of the half-shell (8, 8').

6. Bumper as claimed in claim 3,
**characterised in that**
the edges of the recesses (14, 15) extend in a slightly conical tapering arrangement towards the centre of the insert (10).

7. Bumper as claimed in claim 1,
**characterised in that**
the angular stiffening strips (11) are inserted in the edges of the inserts (10) and their length corresponds to approximately one third of the length of the inserts (10).

8. Bumper as claimed in claim 1,
**characterised in that**
the angular stiffening strips (11) lie in the region of planes which extend through the mounting points (5) of the bumper on the vehicle.

## Revendications

1. Pare-chocs et protection anti-encastrement pour un véhicule automobile, en particulier pour un véhicule automobile utilitaire, comprenant un élément porteur formé en utilisant un profilé en U qui est conformé comme un profilé creux constitué de deux demi-coques (8, 8') profilées en forme de U, lequel profilé creux est doté de pièces de renfort rapportées en forme de U,
**caractérisé**
**en ce que** les pièces de renfort rapportées (10) sont associées respectivement à chacune des demi-coques (8, 8'), sont adaptées à la hauteur (h) de la section du profilé en U et sont insérées en ayant leurs bords s'adaptant dans les bords (17) des demi-coques (8, 8') et, ainsi, s'appliquent par sûreté de forme sur les demi-coques ( 8, 8'),
**en ce que** les pièces de renfort rapportées (10) sont dotées, des deux côtés de leurs extrémités, d'évidements (14, 15) s'étendant vers leur milieu dans la direction longitudinale des pièces de renfort rapportées, et
**en ce que** des cornières de raidissement (11) sont prévues, associées respectivement aux deux bords longitudinaux intérieurs des pièces de renfort rapportées (10).

2. Pare-chocs selon la revendication 1, **caractérisé en ce que** deux pièces rapportées (10) sont associées à chaque dcmi-coque (8, 8'), et **en ce que** ces pièces rapportées ont une longueur à peu près égale à la moitié de la longueur des demi-coques (8, 8'), et sont espacées l'une de l'autre par l'intervalle (A), par leur extrémité tournée vers l'intérieur.

3. Pare-chocs selon les revendications 1 et 2, **caractérisé en ce que** les évidements (14, 15) des pièces rapportées (10) sont conformés de longueur différente en direction de leurs deux extrémités.

4. Pare-chocs selon la revendication 2 ou 3, **caractérisé en ce que** les évidements (14, 15) ont une largeur à peu près égale à un tiers de la hauteur (h) de la pièce rapportée (10).

5. Pare-chocs selon la revendication 3, **caractérisé en ce que** les évidements (15) de plus grande longueur sont tournés l'un vers l'autre, et en direction du milieu des demi-coques (8, 8').

6. Pare-chocs selon la revendication 3, **caractérisé en ce que** les bords des évidements (14, 15) s'étendent en se rétrécissant de manière légèrement conique en direction du milieu de la pièce rapportée (10).

7. Pare-chocs selon la revendication 1, **caractérisé en ce que** les cornières de raidissement (11) sont engagées dans les bords des pièces rapportées (10), et **en ce que** leur longueur correspond à peu près à un tiers de la longueur des pièces rapportées (10).

8. Pare-chocs selon la revendication 1, **caractérisé en ce que** les cornières de raidissement (11) se trouvent dans la zone de plans qui s'étendent à travers les points de fixation (5) du pare-chocs monté sur le véhicule.
